Europäisches Patentamt

European Patent Office

Office européen des brevets

(19)

(11) Veröffentlichungsnummer: **0 049 252 B1**

# (12) EUROPÄISCHE PATENTSCHRIFT

(45) Veröffentlichungstag der Patentschrift:
31.10.84

(21) Anmeldenummer: 81900818.6

(22) Anmeldetag: 09.04.81

(86) Internationale Anmeldenummer:
**PCT/CH 81/00040**

(87) Internationale Veröffentlichungsnummer:
**WO 81/02871 (15.10.81 Gazette 81/24)**

(51) Int. Cl.³: **B 60 Q 1/22, B 60 R 1/06**

(54) **RÜCKFAHRSCHEINWERFER FÜR FAHRZEUGE, INSBESONDERE LASTKRAFTWAGEN.**

(30) Priorität: 11.04.80 CH 2782/80

(43) Veröffentlichungstag der Anmeldung:
**14.04.82 Patentblatt 82/15**

(45) Bekanntmachung des Hinweises auf die Patenterteilung:
**31.10.84 Patentblatt 84/44**

(84) Benannte Vertragsstaaten:
**FR**

(56) Entgegenhaltungen:
**AU - A - 415 830**
**FR - A - 1 159 244**
**GB - A - 1 115 651**
**US - A - 3 644 021**

(73) Patentinhaber: **FELBER, Josef, Riffigrain 12,
6020 Emmenbrücke (CH)**

(72) Erfinder: **FELBER, Josef, Riffigrain 12,
6020 Emmenbrücke (CH)**

(74) Vertreter: **Verdier, Louis, Cabinet BERT, de
KERAVENANT ET HERRBURGER 115 Boulevard
Haussmann, F-75008 Paris (FR)**

## Beschreibung

Die vorliegende Erfindung betrifft einen Rückfahrscheinwerfer für Fahrzeuge, insbesondere Lastkraftwagen und Cars nach dem Oberbegriff des Patentanspruches 1.

Immer wieder ereignen sich bei nächtlichen Rückwärtsmanövern mit Lastwagen und Cars Auffahrunfälle. Oft entstehen nur Sachschäden, zuweilen kommen leider auch Personen zu Schaden. Die Ursachen liegen nebst Fehlen einer Hilfsperson meist in der mangelhaften Sicht des Fahrzeugführers. Bekanntlich stellen bei schweren Motorwagen die Rückspiegel die »zweiten Augen« des Chauffeurs dar. Dieselben vermitteln bei Nacht, und insbesondere wenn sie noch naß sind, oft nur eine sehr unzulängliche Sicht nach hinten. Vor allem auf unbeleuchteten Straßen und Plätzen vermag man dann kein Spiegelbild mehr zu erkennen, sondern nur Finsternis. Dies deshalb, weil die herkömmlichen Rückscheinwerfer am Fahrzeugheck angebracht sind und demzufolge gar nicht das beleuchten, was der Fahrzeugführer sehen kann und möchte, nämlich die Fahrzeugseite, die Fahrbahn und mögliche Hindernisse.

Rückfahrlampen an Autos sind an sich bekannt und sind an der Rückseite des Fahrzeuges montiert, doch leuchten diese einen Raum aus, welcher von der Führerkabine aus ungenügend oder gar nicht überblickt werden kann. Hat das Fahrzeug eine sehr große Länge, so wird nur eine verhältnismäßig kleine Fläche beleuchtet die vom Fahrer so weit entfernt ist, daß diese schlecht oder gar nicht sichtbar ist.

Außerdem sind bereits Fahrzeuge, insbesondere Lastkraftwagen bekannt (GB-A-1 115 651) bei denen ein äußerer Rückspiegel mit einem grünen Licht zusammengesetzt ist, der dazu bestimmt ist ein Überholen erlauben.

Dieses Licht ist von hinten sichtbar und mit dem Rückspiegel auf einer gemeinsamen Stütze montiert.

Aufgabe der Erfindung ist der unzulänglichen Sicht des Fahrers beim nächtlichen Rückwärtsfahren Abhilfe zu verschaffen, und durch Schauen in den Rückspiegel die Stellung der Hinterräder zu erkennen, den Fahrbahnrand zu beleuchten und allfällige Hindernisse deutlich im Spiegel sichtbar zu machen.

Erfindungsgemäß wird diese Aufgabe durch die im Kennzeichen des Patentanspruches 1 genannten Merkmale gelöst. Vorteilhafte Ausbildungen sind dem abhängigen Patentanspruch 2, 3 und 4 entnehmbar.

In der Zeichnung ist ein Ausführungsbeispiel der Erfindung dargestellt, und zwar zeigt
Fig. 1 eine perspektivische Ansicht und
Fig. 2 ein Wirkungsschema.

Am unteren Ende des äußeren Rückspiegels 1 ist ein Rückscheinwerfer 2 angeflanscht, und dessen Lichtstrahl kann in der Horizontalen unabhängig vom Rückspiegel gerichtet werden. In der Vertikalen ist seine ideale Richtung bereits durch die jeweilige Spiegeleinstellung gegeben.

Ein solcher, am Rückspiegel befestigter Rückscheinwerfer vermag nun den ganzen Raum auszuleuchten, der vom Rückspiegel abgebildet wird und damit dem Fahrer sichtbar ist. Die Vorteile sind offensichtlich, sieht der Fahrzeuglenker nun wie tags wo er mit seinen Hinterrädern steht und wohin er fährt. Eine Blendung des Fahrers durch diese Rückscheinwerfer ist nicht möglich, da deren Lichtstrahlen nicht in seiner Blickrichtung liegen.

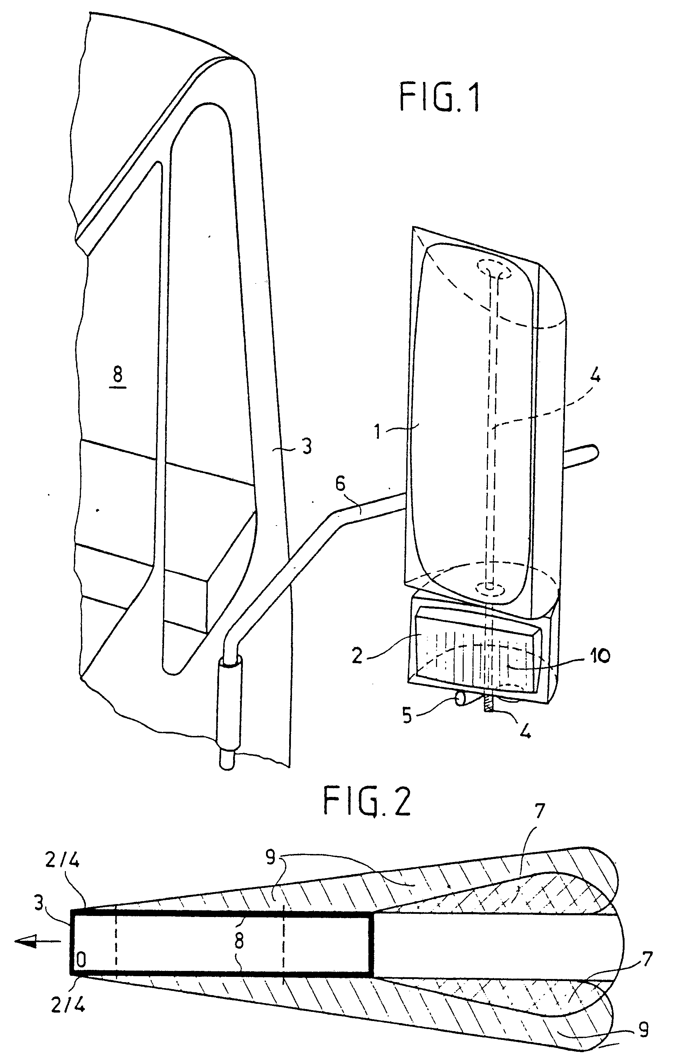

In Fig. 1 ist der Rückspiegel 1 mit integriertem Rückfahrscheinwerfer 2 vorn an der rechten Seite der Kabine 3 des Fahrzeuges 8 montiert. Der Rückspiegel einerseits und der Rückfahrscheinwerfer andererseits bilden je ein Einzelstück, die unmittelbar übereinanderliegen. Der Rückspiegel und die Rückfahrscheinwerfer sind auf einer gestrichelt gezeichneten, eine Achse bildenden vertikalen Haltestange 4 aufgesteckt. Um diese Haltestange 4 sind die Teile 1, 2 gegeneinander drehbar. In ihrer richtigen Position werden sie durch eine Flügelmutter 5, auf dem mit Gewinde versehenen unteren Endteil der Haltestange 4 gegeneinander fixiert. Die Haltestange 4 ist am Träger 6, durch ein nicht besonders gezeichnetes, konventionelles Verbindungsgelenk montiert.

Vor der Glasscheibe des Rückfahrscheinwerfers kann eine rasterartige, mattschwarze Blende 10 angeordnet sein, welche die Lichtquelle in Blickrichtung abdeckt.

In Fig. 2 ist durch gekreuzte Linien der beleuchtete Raum 7 bei konventionellen, an der Rückseite des Fahrzeuges 8 befindlichen Rückfahrscheinwerfer bezeichnet. Mit 9 ist durch schräge Linien der mit dem beschriebenen Erfindungsgegenstand beleuchtete Raum dargestellt. Derselbe erfaßt erweitert sowohl die Hinterseite als auch die beiden Längsseiten des Fahrzeuges.

Die Schaltung des elektrischen Anschlusses dieser Rückfahrscheinwerfer wird mit dem Rückwärtsgang des Fahrzeuges gekoppelt, d. h. sobald der Rückwärtsgang eingelegt wird, brennen die Rückfahrscheinwerfer und erlöschen wieder mit dem Ausschalten des Rückwärtsganges.

## Patentansprüche

1. Rückfahrscheinwerfer für Fahrzeuge, insbesondere Lastkraftwagen und Cars, der ermöglicht, beim Rückwärtsfahren die ganze Wagenseite der Fahrbahn, insbesondere im Bereich der Hinterräder, sowie möglicher Hindernisse, zu beleuchten, dadurch gekennzeichnet, daß der Rückfahrscheinwerfer (2) an der Seite der Kabine (3) des Fahrzeuges (8) montiert und mit einem äußeren Rückspiegel (1) auf einer gemeinsamen, eine Achse bildenden vertikalen Haltestange (4) aufgesteckt ist und daß derselbe und der Rückspiegel (1) um die Haltestange (4) in horizontaler Richtung gegeneinander drehbar sind.

2. Rückfahrscheinwerfer nach Patentanspruch 1, dadurch gekennzeichnet, daß der Rückfahrscheinwerfer (2) und der Rückspiegel (1) in ihrer richtigen Position durch eine Flügelmutter (5) auf dem mit Gewinde versehenen unteren Endteil der Haltestange (4) gegeneinander fixiert sind.

3. Rückfahrscheinwerfer nach Patentanspruch 2, dadurch gekennzeichnet, daß vor seiner Glasscheibe eine rasterartige, mattschwarze Blende (10), welche die Lichtquelle in Blickrichtung abdeckt, angeordnet ist.

4. Rückfahrscheinwerfer nach Patentanspruch 3, dadurch gekennzeichnet, daß die Schaltung seines elektrischen Anschlusses mit dem Rückwärtsgang des Fahrzeuges gekoppelt ist.

## Claims

1. Reversing light for vehicles, especially lorries and motor coaches, which makes it possible, during reversing, to illuminate the whole of the roadway at the side of the vehicle, and especially in the region of the rear wheels, as well as any obstacles, characterised in that the reversing light (2) ist mounted on the side of the cabin (3) of the vehicle (8) and, together with an external rear-view mirror (1), is located on a vertical mounting rod (4) which is a common axis, and in that the reversing light and the rear view mirror (1) are horizontally pivotable relative to one another about the mounting rod (4).

2. Reversing light to claim 1, characterised in that the reversing light (2) and the rear view mirror (1) are fixed in their correct position by means of a wing-nut (5) on the lower end portion of the mounting rod (4), which is threaded.

3. Reversing light according to claim 2, characterised in that there is arranged in front of its glass lens a screen-like matt black shutter (10), which shields the light source in the viewing direction.

4. Reversing light according to claim 3, characterised in that the actuation of the electrical connection thereof is coupled with reversing of the vehicle.

## Revendications

1. Phare de recul pour véhicules automobiles, notamment pour camions et cars, qui perment d'éclairer, lors d'une marche vers l'arrière, la totalité de la voie sur le côté du véhicule, notamment dans la zone des roues arrière, ainsi que des obstacles éventuels, phare caractérisé en ce que le projecteur de recul (2) est monté sur le côté de la cabine (3) du véhicule (8), avec un miroir rétroviseur extérieur (1), et est enfiché sur une tige de support commune verticale (4) formant un axe, de telle sorte que le phare de recul (2) et le rétroviseur (1) peuvent être tournés l'un par rapport à l'autre, en direction horizontale, sur la tige de support (4).

2. Phare de recul suivant la revendication 1, caractérisé en ce que ce phare (2) et le miroir rétroviseur (1) sont immobilisés l'un par rapport à l'autre dans leur position correcte au moyen d'un écrou-papillon (5), vissé sur l'extrémité inférieure, pourvue d'un filetage, de la tige de support (4).

3. Phare de recul suivant la revendication 2, caractérisé en ce que, devant sa vitre, est disposé un écran noir mat à rayures (10) qui cache la source lumineuse en direction de la vue.

4. Phare de recul suivant la revendication 3, caractérisé en ce que le circuit de ses raccordements électriques est couplé à la marche arrière du véhicule.

FIG.1

FIG.2